# EUROPEAN PATENT APPLICATION

(11) **EP 2 015 436 A1**
(43) Date of publication of application: **14.01.2009**
(21) Application number: 07013325.1
(22) Date of filing: 07.07.2007
(51) Int. Cl.: H02M 3/157

(54) **Method for obtaining the average current in the inductive element of a DC-DC-converter**

(71) Applicant: Grundfos Management A/S, 8850 Bjerringbro (DK)
(72) Inventor: Sörensen, Jens, Engen, 8850 Bjerringbro (DK); Kragh, Henrik, 8520 Skørping (DK)
(74) Representative: Vollmann, Heiko

(57) **Abstract**

The method for obtaining the average in the inductive element of a DC-DC converter comprises measuring of the current in the switch or in the diode of the converter and determining the average current with respect to the time.

## Description

The present invention relates to a method for obtaining the average current in the inductive element of a DC-DC converter. The present invention further relates to DC-DC converter working according to this method.

DC-DC converters are well-known in the state of art and used in different types of electronic devices either battery driven or by a power supply unit. DC-DC converters are known as buck-type, boost-type and buck-boost-type. They comprise an inductive element, typically an inductor, switching means, for example a transistor, a diode as well as a capacitor at the output. A DC-DC converter supplies an affixed output voltage by controlling the switch. By switching the inductor is charged or discharged to deliver the constant output voltage which inductor is a magnetical energy store of the converter. For controlling this switch there is a digital controller. In this digital controller a digital control algorithms is implemented. For correct working this digital controller with the digital control algorithms needs actual information of the current in the inductor. So it is well-known to measure, sample and to reconstruct the inductor current for digital controlling the switch. For measuring the current there is a sense resistor serially connected with the inductor or in the low side DC-bus. Accordingly, measuring the voltage over this resistor the current can be calculated.

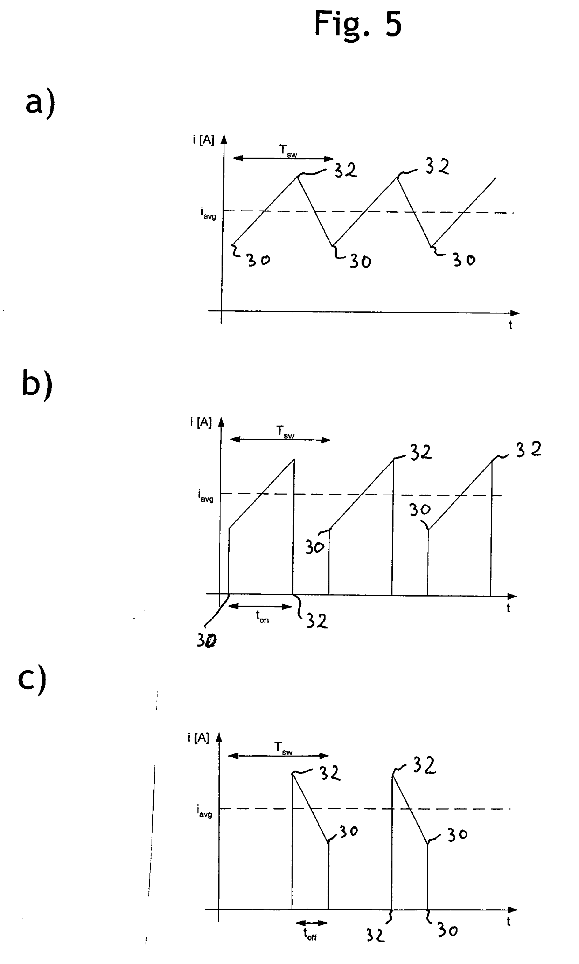

Several methods of controlling the inductor current are known. One commonly applied way is the "Average Current Control (ACC)". In this mode the average current is obtained by continuously measuring the current of the inductor. Depending on the converter the inductor current can be measured in several places. For example for a boost converter the current flow can also be measured by measuring the current of the low-side-DC-bus. For obtaining the average current the current in the inductor has to be measured continuously. The obtained signal is an increasing and decreasing current as shown in Fig. 5a with a frequency of 1/T_{SW} whereby T_{SW} is the time from switching on to switching on or switching off to switching off respectively.

Placing the current sensor in series with the inductor can give problems when an inverter fed load is connected to the output of the DC-DC converter. This is especially true if the load has a large stray capacitance to ground (e.g. an electrical motor). The inverter is switching with high dv/dt in the load. This results in a current through the loads capacitor to ground. To comply with the EMC standards the current has to return to the source (the inverter) in a small loop, for this purpose Y-capacitors are used, so the current do not have to return through the main AC line. Especially the large capacitors mounted in front of the rectifier carry a large common mode current and the only return path for this current is through the current sensor in the low side DC-bus. The common mode current is superimposed onto the actual current, meaning that the sensed current is distorted compared to the true current needed for obtaining the average current in the inductive element. This common mode current is an undesired component and has to be removed before the signal can be used for the feedback control of the digital controller. This can be done by filtering. A further problem of filtering is the phase shift of the signal. For controlling the switch in the intented way it is not only necessary to know the average current in the inductor but also the exact phase of the current. So the phase shift of the signal rules out a digital control algorithm because it requires a current feedback with only a limited phase shift. This is the reason why a controller using this ACC-signal in a DC-DC converter with an inverter and an electric motor must be analogue.

Furtheron it is known to measure the current in the switch. Then the current signal received is free of this common mode current, the problem however is that the current cannot be measured continuously as the current through the switch only flows when the switch is closed. So this method can only be used for peak current controlling (PCC), but not for average current controlling (ACC).

It is an object of the invention to create a method for obtaining the average current in the inductive element of a DC-DC converter which is simple, which does not need complex analysis and which can be used with digital control algorithm as used in digital controllers of DC-DC converters.

According the invention this method for obtaining the average current in the inductive element of a DC-DC converter is done by measuring the current in switching means or in a diode and determining the average current with respect to the time. Further and other objects and advantages of the present invention will be apparent from the further claims, the following description and the figures. Furtheron a DC-DC converter is presented which works according the method of the invention.

The main idea of the invention is not to measure the current in the inductive element which has the disadvantage of this common mode current which is superimposed onto the actual current but to measure the current either in the switching means or in the diode and to determine the average current with respect to time. In most cases the current in the switching means or the current in the diode is linear increasing or linear decreasing so the average current can be determined either by measuring the current in the middle of the time from switching on to switching off or from switching off to switching on. Alternatively the average current can be determined by measuring the current several times during one switch on period or one switch off period. Then all measured currents have to be added and the sum has to be divided by the number of measurements to determine the average current. If the increasing or decreasing of the current is not linear the method according the invention can also be used however this function has to be adapted in an adequate manner.

The method according to the invention has several advantages over the state of art. As the current is not continuously measured there are less sense resistor losses. There is no need of any filters. The signal can be directly used in the digital controller after having passed an A/D converter. There are several possibilities to place the sense resistor. As digital control can be used. It is possible to use different modulations and control strategies. Digital control makes adaptation to input and load conditions easier, modulation strategy can be changed to fulfil sampling strategy. There is no phase shift as known from common filters. As the current is sensed with no or only very little phase lack, the average value may be sampled at exactly two instances per carrier. These two instances are located at the middle of the rising/falling edge of the inductor current. As the average value of the signal varies slowly compared to the carrier frequency it is sufficient to measure the current only in one point of the edge, either in the rising or in the falling edge as it gives the same information.

For measuring the current in the switching means it has to be measured when the switching means are closed. Then the current through the switching means is the current through the inductive element.

If the current in the diode is measured it has to be measured when the switching means are opened then the current in the diode is equal to the current in the inductive element. So it is an advantage of the invention that you can either place the sense resistor in series with the diode or in series with the switching means. Furtheron it can be chosen if the sense resistor is placed on the one or the other side of the diode or the switching means respectively.

According to the invention there are several possibilities to determine the average current in the inductive element. Advantageously the average current is obtained by measuring the current in the switching means or in the diode at a predetermined time from the switching on or switching off point. Then only the current at this time has to be measured to obtain the average current. This can be for example the middle of the time range between switching on and switching off or between switching off and switching on. If it might be a problem to get the exact time then the average current in the inductor can also be calculated from the measured current in the switching means during the switching on time or in the diode during the switching off time. Using this method the current can be measured continuously during this time range or several current measurements can be conducted during this time range.

The method according to the invention can be used for continuous conduction mode as well as for discontinuous conduction mode.

The method according to the invention is also favourable for obtaining the average currents of interleaved DC-DC converters as they are used if a higher output power is demanded. Interleaved converters are built up by two or more DC-DC converters in parallel connection. For interleaved converters it is know to measure the sum of the currents passing through the inductive element. Usually there is one common protection circuit for the interleaved DC-DC converters. According to the invention it is advantageous to have a protection circuit for each DC-DC converter of the interleaved converters. Then this protection circuit has not to bear as high currents as a common protection circuit. These protection circuits obtain the currents of each circuit by the method according to the invention as described above.

The DC-DC converter according to the invention has an input for receiving a DC input voltage, an output for delivering a DC output voltage, at least one inductive element for storing and a releasing energy, switching means for controlling the output, a least one diode between input and output or between high side or low side of the converter, a digital controller for switching on and off the switching means, means for measuring the current in the diode or in the switching means and means for determining the average current in the inductive element on the basis of the current in the diode or in the switching means for digital feedback control.

The current measurement is performed by sampling the analogue current signal put into digital form by using an A/D converter.

Preferred embodiments of the present invention are now described more particularly by way of example with reference to the accompanying drawing which show:
- Fig. 1: a schematic view of a DC-DC converter,
- Fig. 2: a circuit diagram of a DC-DC converter of the boost type according the invention with a sense resistor in four different positions (a-d),
- Fig. 3: a circuit diagram of a DC-DC converter of the buck type according to the invention with a sense resistor in four different positions (a-d),
- Fig. 4: a circuit diagram of a DC-DC converter of the buck-boost type according to the invention with a sense resistor in four different positions (a-d),
- Fig. 5a: the current in the inductor of a DC-DC converter,
- Fig. 5b: the current in the switch of a DC-DC converter,
- Fig. 5c: the current in the diode of a DC-DC converter,
- Fig. 6a: the current in the Y-capacitor of a DC-DC converter connected to an inverter,
- Fig. 6b: the sum of current flowing in the high-side DC-bus and the low side DC-bus (common mode current),
- Fig. 6c: the sensed current in the inductor and
- Fig. 7: a circuit diagram of two interleaved DC-DC converters with protection circuits.

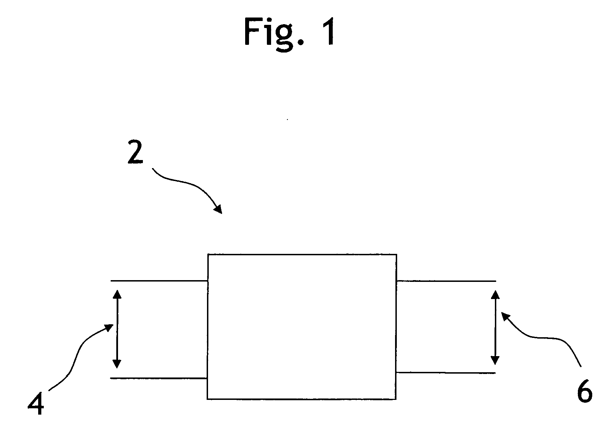

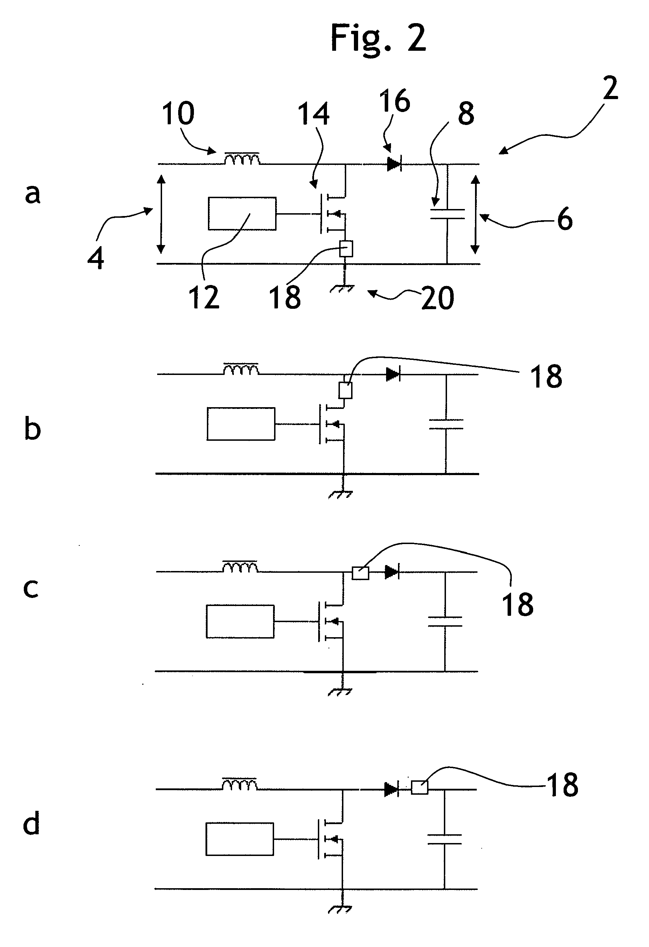

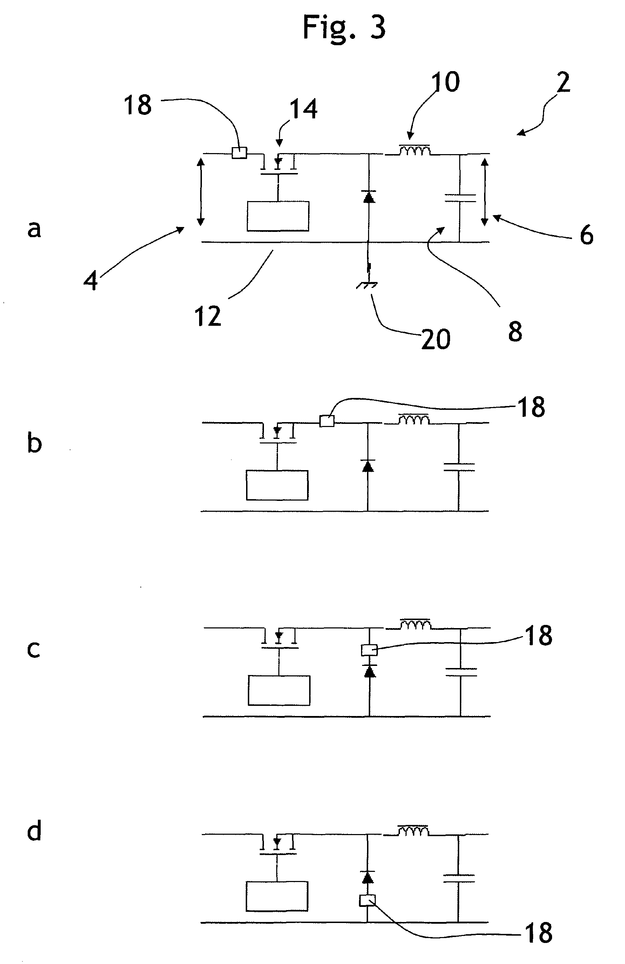

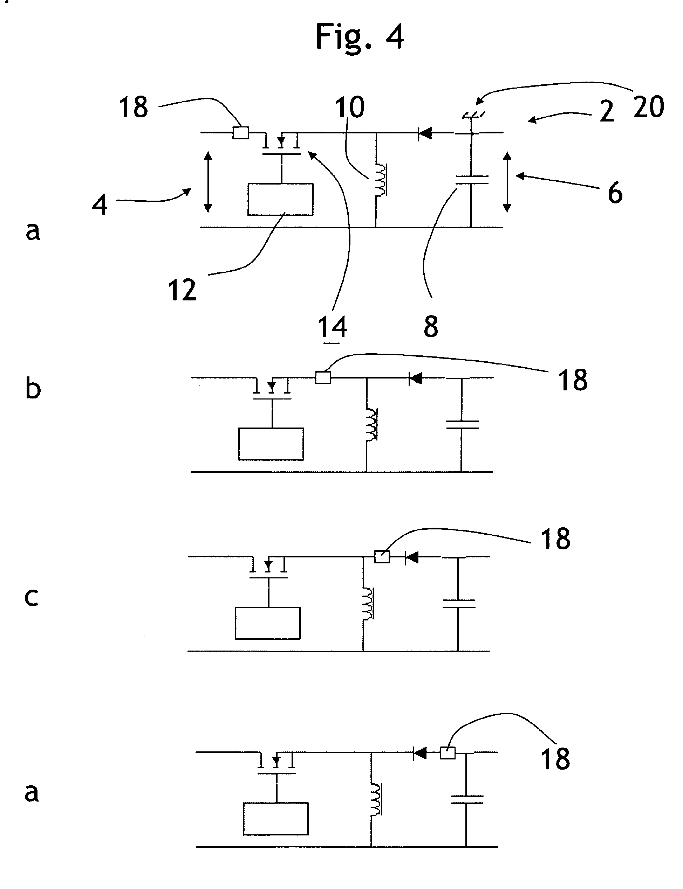

A DC-DC converter 2 as shown in Fig. 1 has an input 4 for receiving a DC input voltage and an output 6 for delivering a DC output voltage. The DC-DC converter 2 can be of the boost type as shown in Fig. 2 of the buck type as shown in Fig. 3 or of the buck-boost type as shown in Fig. 4. All these types of DC-DC converters have a capacitor 8 parallel connected to the output. Furtheron all types of DC-DC converters 2 have an inductive element in form of an inductor 10 which is destinated to store and to release energy in the converter. Furtheron there is a digital controller 12 which controls a switch 14 in form of a transistor. There is a diode 16 and a sense resistor 18. These components 8, 10, 12, 14 16 and 18 are the main components, there may be other components as usual which are not described and which are not necessary for the invention which may be advantageous however. Also not described in detail are measuring means for sampling a current passing through the resistor 18 and the A/D-converter which is connected to the digital controller 12 which gives the digital feedback signal for the current. As DC-DC converters of the buck, boost and buck-boost type are well-known, they are not described in detail. As can be seen from Fig. 2c, 2d, 3c, 3d and 4c, 4d the sense resistor 18 may be connected in series with the diode 16 on the one or the other side of the diode. Alternatively the sense resistor 18 may be connected in series with the switch 14 either on the one or the other side of the switch 14. as can be seen from Figs. 2a, 2b, 3a, 3b, 4a and 4b.

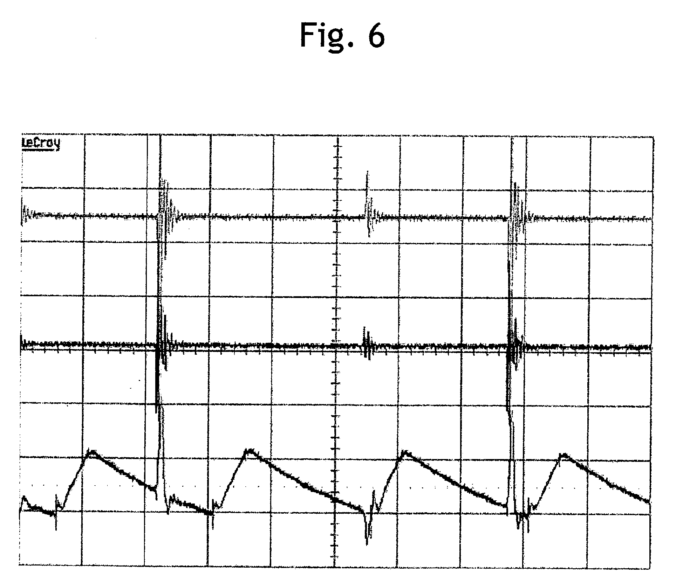

In a DC-DC converter with digital controller with average current mode control the inductor current must be sampled and digitized for feedback. The inductor current increases from the point 30 where the switch 14 has been closed up to the point 32 where the switch 14 has been opened. Then the current decreases down to the point 30 when the switch 14 again closes. This period is the time T_{SW} . When the inductor current is continuously measured by a sense resistor which is connected in series with the inductor there is a measuring signal as shown in Fig. 6c. This signal is the sum of the inductor current and the common mode current. This common mode current is shown in Fig. 6b. This is the reason why the measured current as shown in Fig. 6c cannot be used for average current control with a digital controller as explained in detail above.

According to this invention the inductor current is not measured continuously. The inductor current is measured with the sense resistor 18 either when switch 14 is closed (according to Figs. 2a, b, 3a, b and 4a, b) or when switch 14 is opened (according to Figs. 2c, d, 3c, d and 4c, d). In fig. 5b is shown the inductor current when switch 14 is closed. As the current only flows when the switch 14 is closed a signal can only be obtained during this time range (see Fig. 5b). Alternatively a signal can only be obtained when switch 14 is opened (see Fig. 5c) when the current in the diode 16 is measured. For digital control of the DC-DC converter only the average current has to be known for control feedback and the time when the switch opens and closes is well-known in the digital controller. For determining the average current it is sufficient to measure the current after 1/2 tₒₙ when the switch 14 is closed (see Fig. 5b) or when switch 14 is opened after 1/2 t_{off} (see Fig. 5c). If current measurement takes place after 1/2 tₒₙ the average current is directly obtained without any calculation. This is the same when measurement takes place half a period later after 1/2 t_{off} (Fig. 5c). As the signal of the current measurement in the switch 14 or in the diode 16 or both does not comprise the aforementioned common mode current there is no need of filtering and so there is no phase shift. The signal can be directly used by the digital controller 12 for feedback after having passed the A/D-converter.

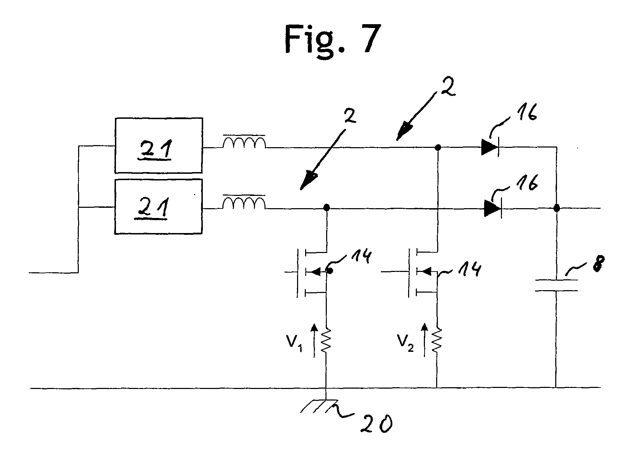

Fig. 7 shows interleaved converters which are built in form of two parallel boost-converters.

### List of reference numerals

| | | |
|---|---|---|
| 2 | - | DC-DC converter |
| 4 | - | Input |
| 6 | - | Output |
| 8 | - | Capacitor |
| 10 | - | Inductor |
| 12 | - | Digital controller |
| 14 | - | Switch |
| 16 | - | Diode |
| 18 | - | Sense resistor |
| 20 | - | Chassis ground |
| 21 | - | Protection circuit |
| 30 | - | Switching on point |
| 32 | - | Switching off point |

## Claims

1. Method for obtaining the average current in the inductive element (10) of a DC-DC-Converter (2) by measuring the current in switching means (14) or in a diode (16) of the converter (2) and determining the average current with respect to time.

2. Method according to claim 1, wherein the current in the switching means (14) is measured when switching means (14) are closed.

3. Method according claim 1, wherein the current in the diode (16) is measured when the switching means (14) are opened.

4. Method according to any of the preceding claims, wherein the average current is obtained by measuring the current in the switching means (14) or in the diode (16) at a predetermined time from the switching on (30) or switching off (32) point.

5. Method according to any of the preceding claims, wherein the average current is calculated from the measured current in the switching means (14) during the switching on time or in the diode (16) during the switching off time.

6. Method according to any of the preceding claims, wherein the average currents of interleaved DC-DC-Converters (2)are obtained.

7. DC-DC-Converter comprising
a. an input (4) for receiving an input-voltage
b. an output (6) for delivering an output-voltage
c. at least one inductive element (10) storing and releasing energy
d. switching means (14) for controlling the output-voltage
e. at least one diode (16) between input (4) and output (6) or between high-side and low-side of the converter (2)
f. a digital controller (12) for switching on and off the switching means (14)
g. means (18) for measuring the current in the diode (16) or in the switching means (14)
h. means for determining the average current in the inductive element (10) on the basis of f the current in the diode (16) or in the switching means (14) for digital feedback control.

8. Interleaved converter comprising at least two DC-DC-Converters (2) according to claim 7, and a protection circuit (21) for each DC-DC-converter (2)
